Europäisches Patentamt

**European Patent Office**

Office européen des brevets

(19)

(11) Publication number:  **0 160 772**
**A2**

(12) # EUROPEAN PATENT APPLICATION

(21) Application number: **84830172.7**

(22) Date of filing: **06.06.84**

(51) Int. Cl.⁴: **F 16 L 57/00**
**F 16 L 58/00, F 16 L 59/06**
**F 16 L 9/18**

(30) Priority: **04.05.84 IT 4813884**

(43) Date of publication of application:
**13.11.85 Bulletin 85/46**

(84) Designated Contracting States:
**AT BE CH DE FR GB LI NL SE**

(71) Applicant: **Rietti, Antonio**
**Via Circonvallazione, 5**
**I-65017 Penne (PE)(IT)**

(72) Inventor: **Rietti, Antonio**
**Via Circonvallazione, 5**
**I-65017 Penne (PE)(IT)**

(74) Representative: **Mascioli, Alessandro, Prof.Dr.**
**c/o A.N.D.I. Associazione Nazionale degli Inventori Via**
**Lima, 35**
**I-00198 Roma(IT)**

(54) **A tubular structure with a polygonal air space for the wall-embedded distribution of town gas and other fluids.**

(57) A tubolar structure for the distribution of town gas and other fluids, to be placed under the whitewash and/or earthed up without any explosion danger, said structure being formed by an outer PPC cylinder (1) for the wandering currents, containing gas conduct pipe (3) being separated from said first one by a wide air space for ventilation and outlet of eventual leaks, realized with polygonal structures, preferably equilateral triangular.

FIG.1

EP 0 160 772 A2

A tubolar structure with a polygonal ventilation a **0160772**
space for the unde-whitewash distribution of town
gas and other fluids.

Antonio RIETTI

The present invention concerns a tubolar structure for the realization of distribution systems of town gas to the various home consumers or of other kinds.

It is already well known that combustible gas is ac= tually distributed to the consumers in buildings by means of metal pipes placed outside said buildings so as to avoid the great danger that eventual leaks may cause explosions in earthed up pipes.

Obviously, such necessary disposition shows consider= able aesthetic inconveniences and furthermore the pi= pes being placed outside of the building are exposed to all atmospheric agents, besides accidental and vo= luntary damaging, with great possibilities of causing gas leaks.

It is the aim of the present invention to realize a pipe structure for gas and other fluids which may be earthed up and/or placed under-trace in the walls with out any explosion danger and similar.

This aim is reached by means of a tube out of zinc plated steel for the gas canalization, surrounded, all along the extension thereof, by a central polygonal air space for keeping said pipe separated from an out er tubolar protection out of plastic material for the isolation of wandering currents so as to obtain a na= tural ventilation with evacuation of eventual gas leaks through well known outlets.

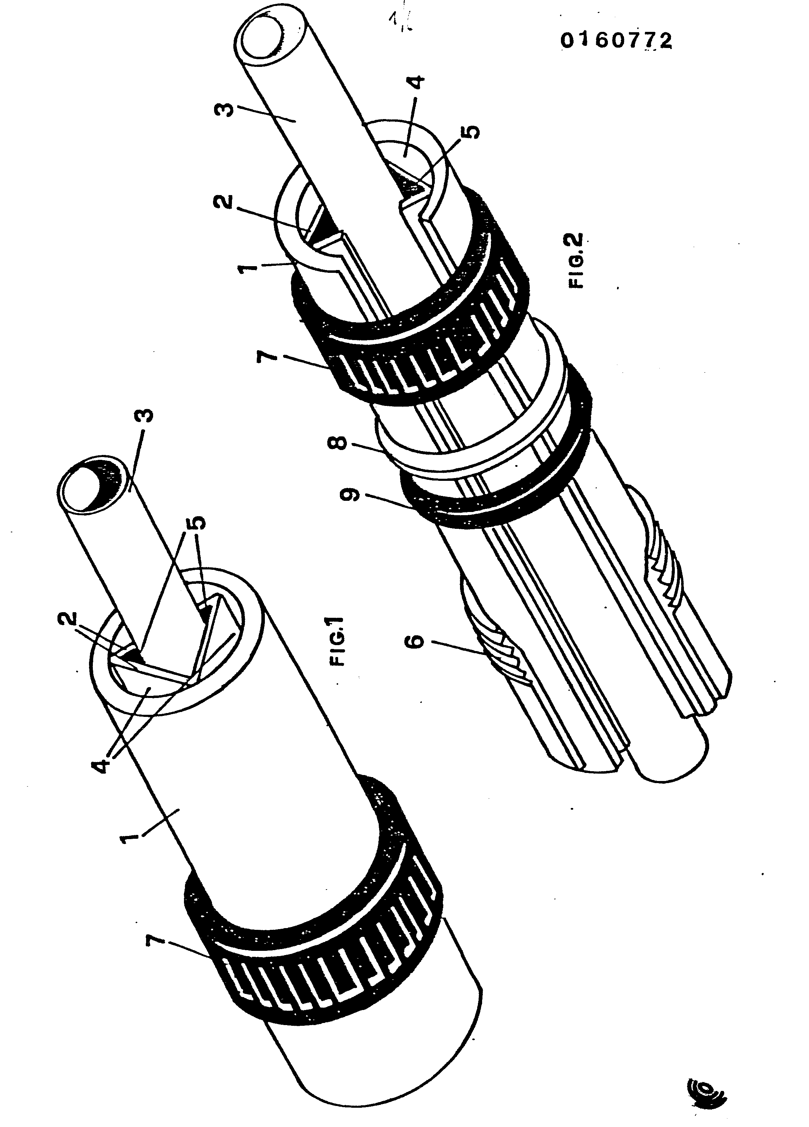

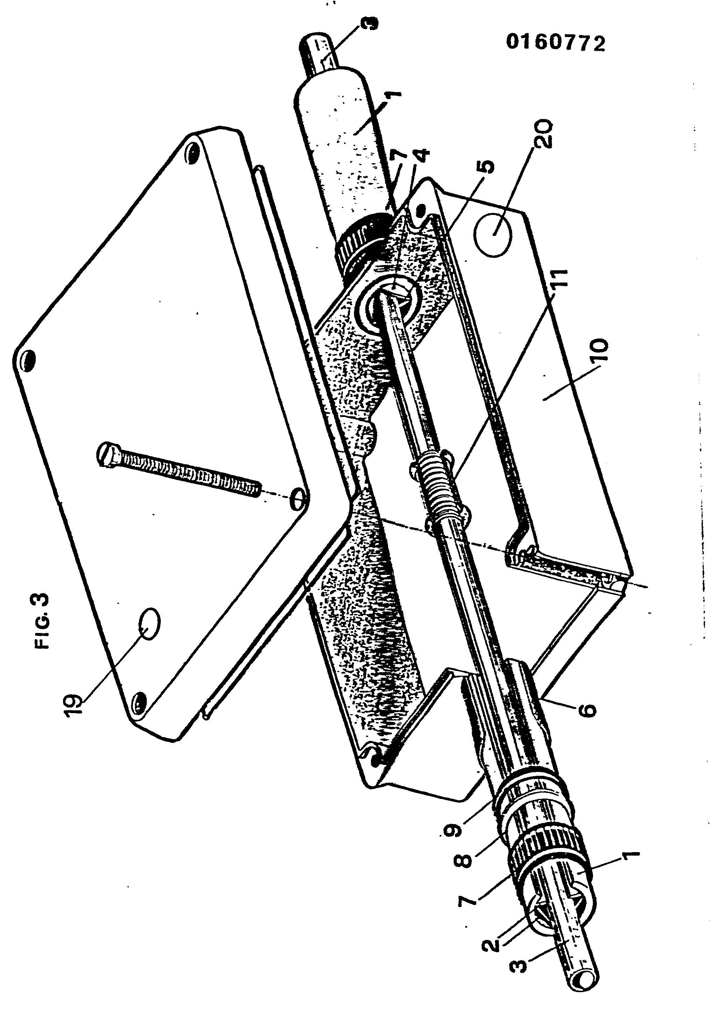

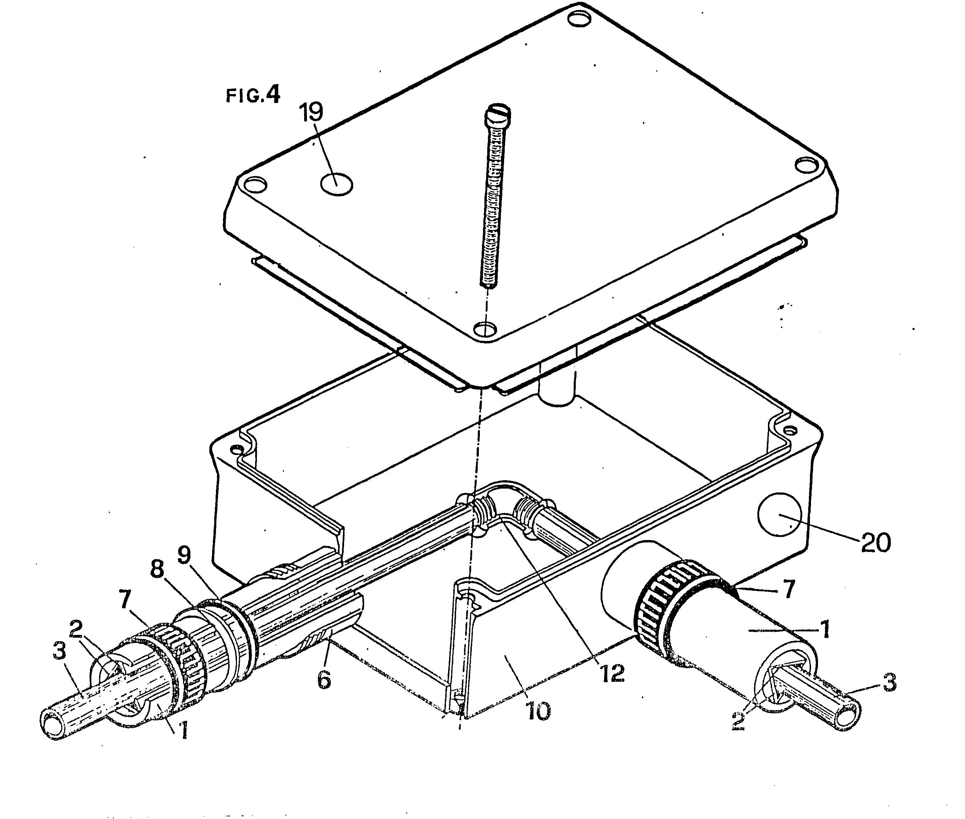

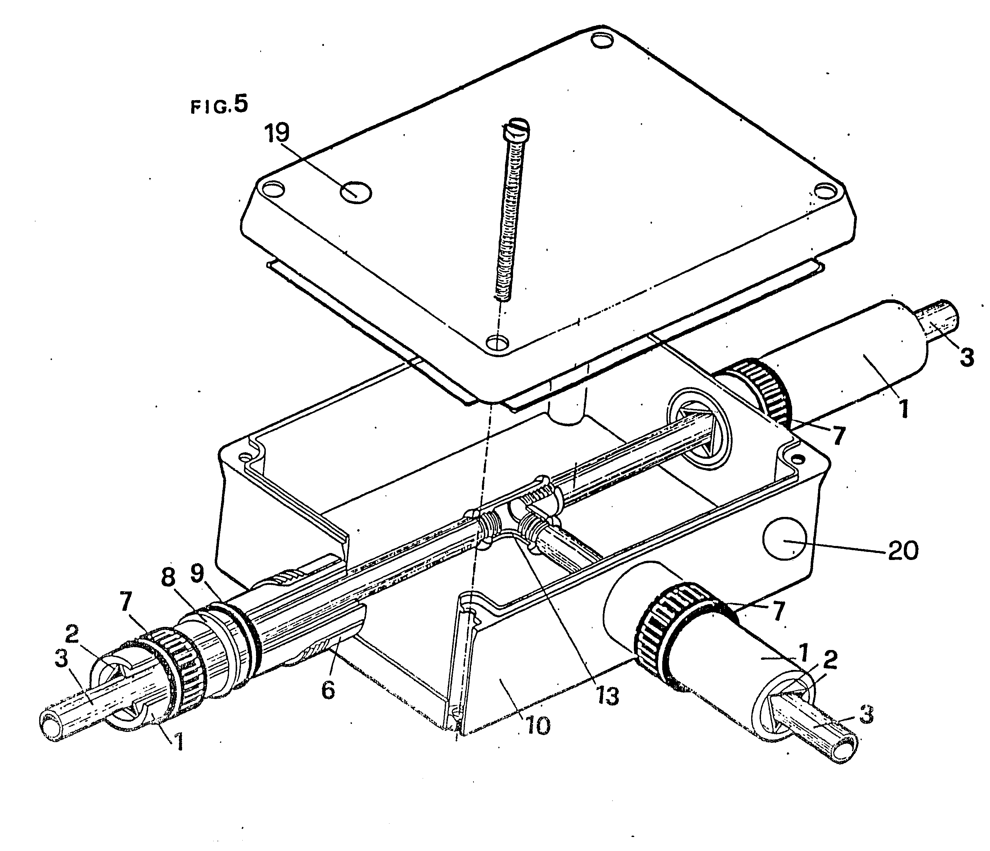

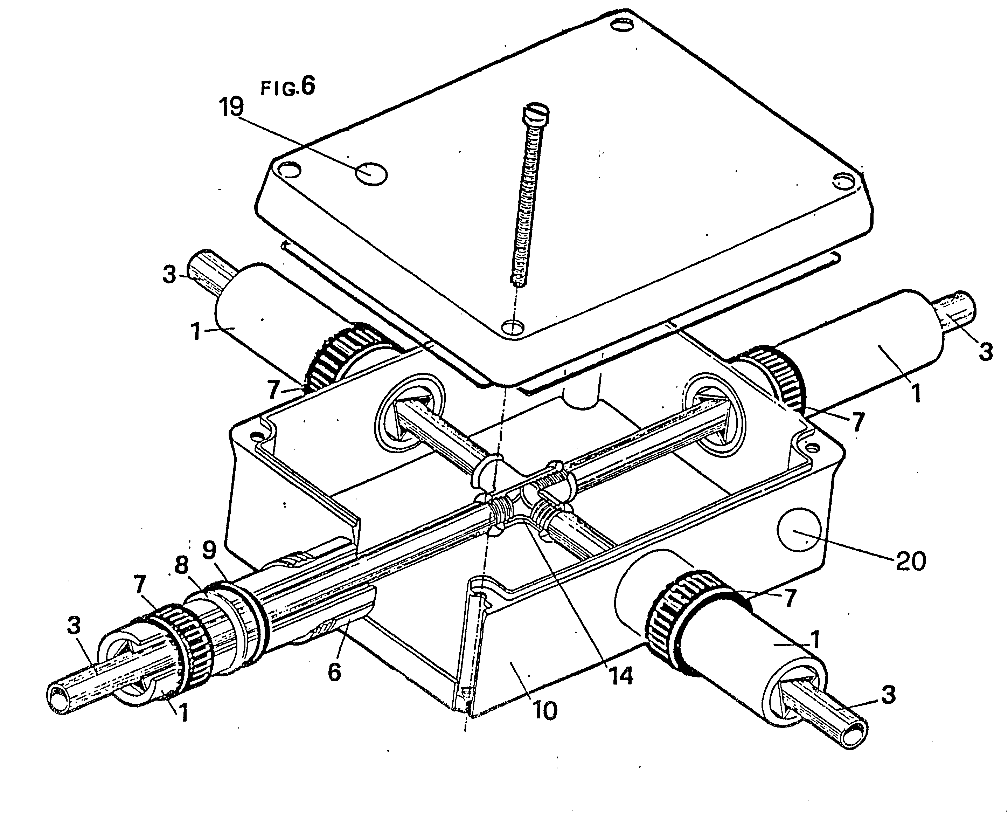

The present invention is illustrated in a prefered em bodiment in the attached figures 1, 2, 3, 4, 5, 6 and 7, wherein:
- figures 1 and 2 show axonometric views in vertical sections of a pipe with a triangular air space with the connection elements;
- figures 3, 4, 5 and 6 show the pipe of the axonome= tric view of figures 1 and 2 as installed in the con nector-blocks thereof, shown in an exploded view and with connections respectively as a coupling box, in the shape of an elbow, a T or a cross;
- figure 7 shows a scheme of a complete installation for the gas distribution in a building, the pipes being earthed up and under-trace.

Relating to the details of the figures, outer protec= tion pipe 1 is shown, preferably out of PPC, so as to obviate the wandering currents, containing the equila teral triangular structure 2 for the insertion of an inner zinc coated steel pipe 3 so as to realize air spaced 4 and 5 for the outlet of eventual gas leaks and for the collection of the condensing in the spac= es between outer cylinder 1 and the plates of triangu lar structure 2, and between said structure 2 and the surface of inner pipe 3.

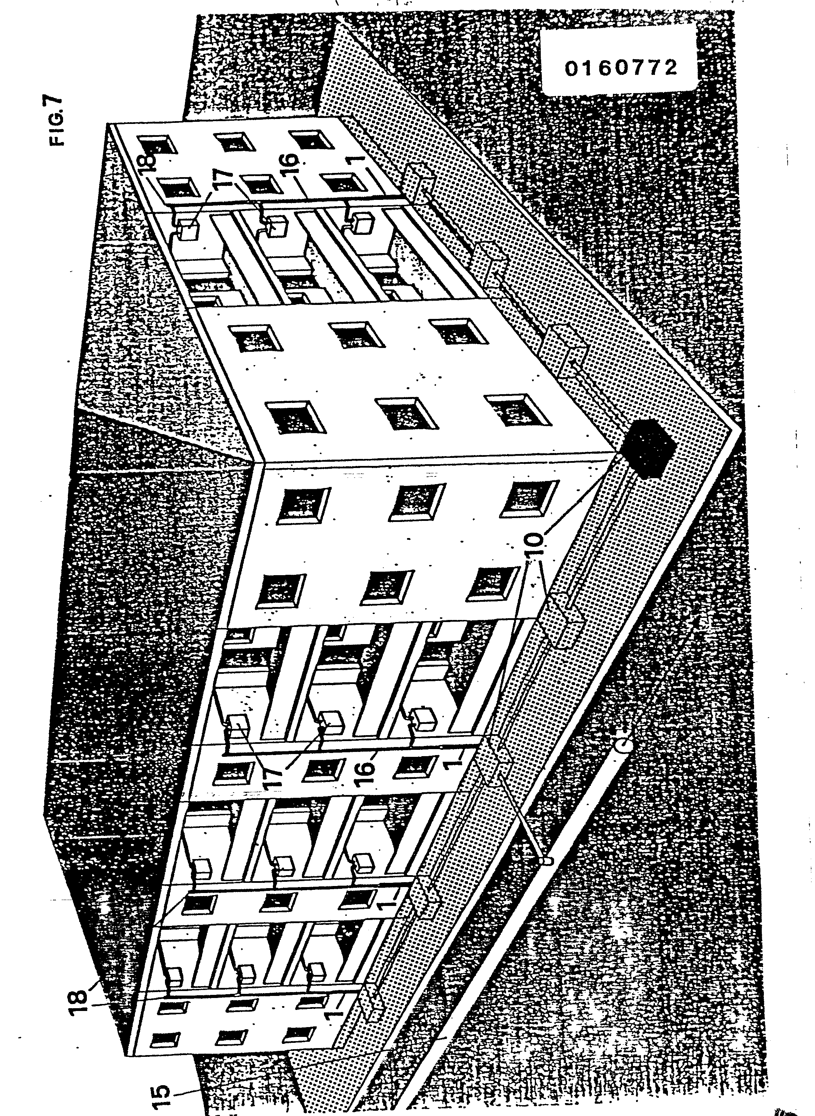

For connecting said tubing, according to the present invention, to the different connector blocks 10, coupling box 6, metal locking ring 7, naylon resting ring 8 and conical rubber packing 9 are used to that a plurality of portions of the pipes are connected to coupling boxes 11 and/or elbows 12, and/or T-shap ed connections 13, and/or cross-shaped connections 14 preferably out of malleable cast-iron. The installa= tion of the tubolar structures takes place as shown in figure 7, wherein the gas comes from general duct 15 and connection-blocks 10, with all kinds of con= nections; said gas is led, through the portions of said tubolar structures 1, installed in the walls, to the eventual zinc coated steel pipes 16 up to the gas- meters 17, with well known pipette outlets 18 with a connection on hole 19 of the connection-blocks, as well as with the possibility of inserting a rod for outlet at earth of wandering currents, to be applied to hole 20.

It is evident that in the structure according to the present invention a natural continuous ventilation ex̲ ists with communication areas through all air spaces 4 and 5 of the tubing, the inner spaces of blocks 10 and outlets 18, so as to eliminate any gas accumulat= ing danger in the pipes placed in the walls and earth̲ ed up, thus excluding all possible explosions.

0160772

CLAIMS

1) A tubolar structure for the distribution of town gas or other fluids characterized in the presence of a po lygonal air space between an outer pipe out of pla = stic material and an inner pipe for the gas conduction, so as to result in being placed under-trace and/or earthed up, as it allows ventilation and outlet of e= ventual gas leaks.

2) A tubolar structure for the distribution of gas accord ing to claim 1 characterized in the presence of sup= ports placed in the form of an equilateral triangular structure 2 inside pipe 1 and containing gas conduct pipe 3 so as to realize air spaces 4 and 5 for the out let of gas leaks towards pipettes 18 with connection on hole 19 of connection-blocks 19, as well as of the possibility of inserting a rod for the outlet at earth of wandering currents to be applied on hole 20.

3) A tubolar structure for the distribution of gas accord ing to claim 1 characterized in a ventilation also between coupling box 11, elobow joints 12, T-shaped joints 13 and cross-shaped joints 14, due to air spa ces 4 and 5 which also communicated with the inner space of connection-blocks 10.

0160772

FIG.1

FIG.2

FIG. 3

FIG.4

19

20

9
8
7
2
3
1
6
10
12
7
1
3
2

0160772

0160772

FIG.5

0160772

FIG.6

FIG.7

18
17
16
1
10
15